# EUROPEAN PATENT APPLICATION

(11) **EP 1 953 717 A2**
(43) Date of publication of application: **06.08.2008**
(21) Application number: 08250375.6
(22) Date of filing: 31.01.2008
(51) Int. Cl.: G07F 17/32

(54) **Improvements in amusement or gaming machines**

(30) Priority: 01.02.2007 GB 0701899
(71) Applicant: Electrocoin Leisure (S.Wales) Limited, London, NW10 7XR (GB)
(72) Inventor: Stergides, John, London WC1N 1HD (GB); Dinning, Andrew, Bath Avon, BA2 3BT (GB); Troy, Robert, Bath, Avon, BA2 3BT (GB)
(74) Representative: Wilson Gunn

(57) **Abstract**

A group of amusement or gaming machines 1, -N, is associated with a control unit via a link 11. The control unit may operate to enable a player at any of the machines to participate in a bonus game, on invitation at random intervals by the control unit, or on attaining a preset score or feat.

## Description

This invention relates to improvements in amusement or gaming machines.

It is concerned with offering games or features or other offers simultaneously to each one of a plurality of such machines.

The object of the invention is to provide added novelty and thus attraction to amusement machines, and supplementary winning opportunities in gaming machines which increase the attractiveness of the games to users of the machines.

It has been proposed to provide multi player games or amusement machines, wherein there is full interaction between the individual player terminals or machines in a group, and a central control unit, sometimes with full interaction and competition between the players. These involve two-way communication between the central control unit and the individual terminals or machines in the group.

In the present invention it is proposed that a group of amusement or game-playing or gaming machines should be linked to receive instructions from a single unit, which at randomly determined intervals, sends a message or instruction to all of the linked machines which are in play at that moment to offer the opportunity to each player to play a bonus game, or some other potentially attractive feature.

The invention thus provides a plurality of amusement or the like machines, and a unit connected to the amusement or the like machines, the unit having means adapted to detect which machines are being used, means to send a message to each of the machines which are in use inviting participation in a bonus game, and actuating means associated with a timer device for actuating the sending means, the detector means being adapted to determine whether a sufficient number of the machines are in use whereby the sending means can be actuated when initiated by the timer device.

In addition to sending a message to each machine which is in use or play, the sending means may activate a program in each machine which causes the display of an interactive means which enables each respective player to play a selected bonus game.

If at any timer actuation insufficient machines are in use, the sending means is not caused to send a message, and the timer means operation is resumed.

The timer means may be activated at intervals which are randomly or quasi-randomly determined, or at irregular intervals from a menu which is followed sequentially. The menu may be arranged to repeat over a cycle somewhat longer or shorter than 24 hours or than an integral multiple or division thereof so that the same sequence of timings do not recur at the same time of an evening or other sessions.

The sending means may activate randomly or in accordance with a prescribed sequence, any one of a menu of bonus games.

The arrangement may be such that a player may opt out of a bonus game, or failure to enter a bonus game may result in a penalty in the game he is playing, such as a loss of points or credit. The bonus game may involve a competitive element in that an enhanced prize may be offered to the player attaining the highest score in a contest of skill, knowledge or chance, such as a quiz or a test of manual dexterity or speed of reaction.

Alternatively, each player may play the bonus game in isolation, success or failure being judged independently of the other players. In this case the action of the unit is restricted to sending the message and making the bonus game or feature available.

The plurality of machines may be a group of amusement, game playing or gaming machines in a section of an arcade or casino, up to any number, including all the related machines in a particular establishment.

An embodiment of amusement or gaming apparatus according to the invention is illustrated by way of example in the accompanying diagram.

The apparatus comprises a plurality of amusement game-playing or gaming machines 1, 2 - N-1, N, which may be located in a group, or section of an arcade or casino, or comprise all machines of a like kind in a room or premises, and a control unit 10 which is connected to each of the machines, through a one-way link 11.

The control unit includes an initiator device 12 which is operative to send a message from a message generator 13 to each of the machines 1 - N simultaneously, and also may send a program or instructions to enable the machines to play a bonus game, either by transmitting the game program to RAM in the machine for temporary use, or by sending an enable code to allow access for the time being to game instructions in ROM permanently in the machine, from a Bonus Game menu 14, which may offer any of one or more bonus games at random, or in a predetermined sequence from a list and transmit the relevant instructions or access code to the machines 1 - N.

The initiator device is activated to send the message and instructions by a trigger device 15 which operates in response to a timer 16 which sends a signal to the trigger 15 on expiry of a delay. The duration of the delay is set from a delay setting device 17 which is controlled either by a randomiser which sets a random sequence of time intervals within a preset range of maximum and minimum delays, or from a menu of time intervals wherein the next delay item in sequence is used to program the next operation of the timer 16.

The apparatus is used to send, at arbitrary intervals, a signal to each of the machines 1 - N which are in use, causing display to each player of a message inviting the player to participate in an extra or bonus game. This may involve different features and/or enhanced prize value with respect to the main game played on the machine.

Each player may opt to play the bonus game or not. The bonus game will not usually feature competition between players on different machines, but this is not excluded from the scope of the invention. For example, a prize may be offered to the player who is first to solve a puzzle, or negotiate an on-screen obstacle course.

Machines not in use are set up to block the message or to indicate non-use to a sensor in the unit 10. If less than a preset number of machines are in use, then the initiator 12 may be aborted, and the timer 16 reset with a new time interval, the message not being sent or bonus game offered.

In one preferred game, three or more terminals 1, 2, 3 etc are provided, and each is set up to run a three or more reel fruit machine game. The control unit 10 operates as a central feature generator. This runs continuously producing random wins. These wins may feature cash prizes up to a maximum value of £35.00.

Each of the terminals 1, 2, 3 etc can enter the feature on attaining a preset combination of symbols from the fruit machine game, and has access to the next random play and to the prize awarded by the control unit 10, and the player at each terminal which has entered the feature, is credited by the respective terminal with the amount of the prize.

There is no communication between the terminals 1, 2, 3 etc and each terminal is only in communication with the control unit 10, to signal when a terminal has displayed an access winning combination, and to communicate the result of each feature game play to these terminals which have access at that time to the control unit.

If a terminal gains access during running of a feature game play, it has to await completion of the play which is in progress, and then participate in the next feature game play.

It will be appreciated that the bonus game will usually be similar in type to the game or menu of games offered on the machines: i.e. involving the use of an element of knowledge or skill in arcade and public settings, or predominantly based on chance in licensed casinos.

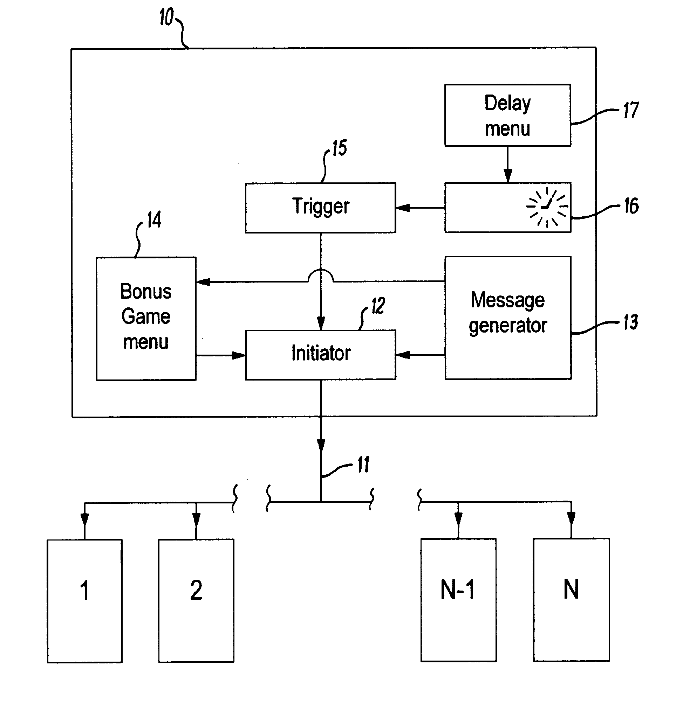

## Claims

1. Amusement or gaming apparatus comprising a plurality of amusement or gaming machines, and a control unit connected to the amusement or gaming machines, the control unit being operatively connected to each of said machines, each said machine having means to access said control unit when prescribed conditions are satisfied, and the control unit having means to communicate the playing of a feature game and its outcome to each machine which has access thereto at any time.

2. Apparatus according to claim 1, wherein the control unit comprises means to detect which machines are in play, and means to send a message to each of the machines which are in play inviting or allowing participation in a bonus game, and actuating means associated with a timer device to activate the sending means, the detector means being adapted to determine whether a sufficient number of the machines are in use whereby the sending means can be actuated when initiated by the timer device.

3. Apparatus according to claim 1, wherein the control unit is operated continually to play a series of prize awarding games, each machine having means for playing a first stage game, and means for determining of an event qualifying to provide access to the control unit for participation in one of the series of games being played by the control unit, and the control unit being arranged to permit any machine qualifying during playing of one or said series of games, to participate in the next game of the series.

4. Apparatus according to claim 3, wherein such participation is limited to displaying any prize awarded by the control unit in any such game, and inviting the player to accept or reject the prize.

5. Apparatus according to claim 2, wherein the sending means is operable to activate a program in each machine which causes the display of an interactive means which enables each respective player to play a selected bonus game.

6. Apparatus according to claim 5, wherein the timer means is activatable at intervals which are randomly or quasi - randomly determined, or at irregular intervals from a menu which is followed sequentially.

7. Apparatus according to claim 6, wherein the menu is arranged to repeat over a cycle which is somewhat longer or shorter than 24 hours, or an integral multiple or division thereof, so that the same sequence of timings do not recur at the same time of an evening or other session.
